# EUROPEAN PATENT APPLICATION

(11) **EP 3 113 076 A1**
(43) Date of publication of application: **04.01.2017**
(21) Application number: 15306046.2
(22) Date of filing: 30.06.2015
(51) Int. Cl.: G06K 9/46, G06F 17/30, G06K 9/62

(54) **METHOD AND APPARATUS FOR DERIVING AN IMAGE SIMILARITY MEASURE BASED ON REPETITIVE FEATURE POINTS**

(71) Applicant: Thomson Licensing, 92130 Issy-les-Moulineaux (FR)
(72) Inventor: Winter, Marco, 30659 Hannover (DE)

(57) **Abstract**

Feature points in two images to be compared are detected, position information of the feature points is derived and local neighborhood descriptors of the feature points are derived, the local neighborhood descriptors not comprising position information. Those of the feature points of each image whose local neighborhood descriptors are similar to each other are grouped into feature point groups and the image similarity measure is derived from the groups.

## Description

### Field of the Invention

The invention relates to a method and apparatus for deriving a feature point based image similarity measure, in particular an image similarity measure based on repetitive feature points.

### Background

In a digital movie production context, finding the origin of a given processed image in a pool of raw and interim material is a recurring task. Because of this context, the finding criterion must be tolerant against typical processing steps like cropping, format change, or recoloring.

Under the assumption that the image at hand has been manipulated, for example to fit to a certain video standard, or it has undergone postproduction steps such as cutting, color grading, resizing or the like, it is desirable to find the original image or image sequence for example for performance of further or alternative post production steps. Provided that the master data, which means the original takes captured during movie making, are available, finding the corresponding take or sequence of images, for example for the purpose of re-editing video data, is a rather time consuming process.

US 2012/0011119 A1 discloses a database for object recognition, which is generated by performing at least one of intra-object pruning and inter-object pruning, as well as key- or feature-point clustering and selection. The intra-object pruning removes similar and redundant feature-points within an object and different views of the same object. It may be applied to generate and associate a significance value, such as a weight, with respect to the remaining feature-point descriptors. Inter-object pruning retains the most informative set of descriptors across different objects. This is performed by characterizing the discriminability of the feature-point descriptors for all of the objects and by removing feature-point descriptors with a discriminability that is less than a threshold. Additionally, a mobile platform may download a geographically relevant portion of the database and perform object recognition by extracting features from the query image and using determined confidence levels for each query feature during outlier removal.

Furthermore, Bay et al.: "Speeded-up Robust features (SURF)", Computer Vision and Image Understanding, Vol 110, No 3, pp 346-359, Jun 2008 discloses a representative local descriptors (RLDs) based approach to improve image matching efficiency. Local descriptors in one image are clustered with a similarity based method where descriptors are clustered into one group if they are similar enough to their mean. Then only the RLD in each group is used in matching and the number of matched RLDs is used to evaluate the similarity of two images.

### Invention

Therefore, it is an object of the invention to provide a fast and reliable method and apparatus for deriving a feature point based image similarity measure for finding, in a set of given images, a most similar one offset given image compared to a workpiece image.

The object is solved by a method of deriving a feature point based image similarity measure, wherein feature points in two images to be compared are detected, position information of the feature points is derived and local neighborhood descriptors of the feature points are derived, the local neighborhood descriptors not comprising position information.

The method is enhanced in that those of the feature points of each image whose local neighborhood descriptors are similar to each other are grouped into feature point groups. Furthermore, an image similarity measure is derived as a combination of one or more of the following conditions a) to e). The conditions are as follows:
a) a similarity of the number of feature point groups in the two images,
b) a pairwise similarity of the position of the feature point groups in the two images,
c) a pairwise similarity of the position information of the feature points in groups in the two images,
d) a similarity of the distances between the feature point groups of one image with the distances between the feature point groups of the other image,
e) a pairwise similarity of the position of the ungrouped feature points of the two images.

Advantageously, the method of finding the image similarity measure enables a search engine, which is applied in finding similar images to work almost autonomously wherein the user interaction is reduced to a minimum amount.

In addition to this, the particular strength of the approach is that also non-unique or repetitive feature points are exploited so as to establish the image similarity measure. The invention is based on the consideration that the individual non-unique feature point does not represent valuable information with respect to image comparison. However, a plurality of these feature points grouped together can be useful. It is the geometrical arrangement of the similar feature points which represents the unique information based on which image comparison is performed.

There are various approaches according to the above-referenced conditions for discriminating between similar and non-similar images. According to condition a), it is the mere number of feature point groups identified in the two images. Two images are thus considered as similar if the same number of feature point groups have been identified in them. Taken to the extreme, the criterion degenerates into whether or not a feature point group has been identified in an image.

Following condition b), it is the position of the entire feature point group in the two images, which is compared. In other words, the structure of the pattern causing the presence of a feature point group in the image is arranged at an almost identical position in the respective images. Feature point group based similarity measurement is, however, not limited to the position of the feature point group itself, but also to the arrangement or position of the feature points in such a group. This is done by establishing condition c). If there is more than one feature point group in the image, the relative arrangement of the feature groups with respect to each other is exploited for identifying similar pictures; this represents condition d). Finally, according to condition e), also the geometrical arrangement of ungrouped feature points is applicable for identifying similar pictures.

The image similarity measure can advantageously be combined with further image similarity measures, for example those, which are based on uniquely identified feature points. In combination with further similarity measures, the entire search process can be particularly enhanced in speed and with respect to the necessary computational power. Those image similarity measures are furthermore advantageously supplementary to each other. While image similarity measures making use of unique feature points exploit this information for identifying similar images, the here discussed group based image similarity measure based on similar or repetitive feature points uses the feature points skipped in those before mentioned image similarity measures.

In an advantageous embodiment of the invention, grouping is also performed for those of the feature points of each image whose local neighborhood descriptor is similar to a local neighborhood descriptor of a next neighbor feature point.

In other words, the grouping of similar feature points is not the only strategy to establish the similarity measure. A group of feature points, wherein only neighbor feature points need to be similar is another grouping strategy. This way of grouping advantageously also covers feature points whose local neighborhood descriptors change gradually from top left to bottom right of an image.

In another advantageous embodiment of the invention, the local neighborhood descriptors comprise scaling independent parameters, which are applied for deriving the image similarity measure.

Furthermore, the two images to be compared are preferably resized to approximately the same predetermined resolution, before the detection of the feature points. For example, the images are size-rectified to a spatial dimension of 1920 x 1080 pixels.

The object is further solved by an apparatus for deriving a feature point based image similarity measure. This apparatus comprises a feature point detection unit equipped and configured to detect feature points in two images to be compared, and a feature point analysis unit equipped and configured to derive position information of the feature points and to derive local neighborhood descriptors of the feature points, the local neighborhood descriptors not comprising position information.

The apparatus is enhanced in that it comprises an image similarity measurement and grouping unit. This unit is equipped and configured to group those of the feature points of each image whose local neighborhood descriptors are similar to each other into feature point groups. Furthermore, the unit is equipped and configured to derive the image similarity measure as a combination of one or more of the following conditions:
a) a similarity of the number of feature point groups in the two images,
b) a pairwise similarity of the position of the feature point groups in the two images,
c) a pairwise similarity of the position information of the feature points in groups in the two images,
d) a similarity of the distances between the feature point groups of one image with the distances between the feature point groups of the other image,
e) a pairwise similarity of the position of the ungrouped feature points of the two images.

Same or similar advantages, which were mentioned relative to the method of deriving a feature point based image similarity measure apply to the apparatus according to aspects of the invention in a same or similar way and are therefore not repeated.

In an advantageous embodiment of the invention, the apparatus is further enhanced in that the image similarity measurement and grouping unit is further equipped and configured to group those of the feature points of each image whose local neighborhood descriptor is similar to a local neighborhood descriptor of a next neighbor feature point.

According to another advantageous embodiment of the invention, the local neighborhood descriptors comprise scaling independent parameters and the image similarity measurement and grouping unit is further equipped and configured to apply these parameters for deriving the image similarity measure.

The object is also solved by a method of finding, in a set of given images, a most similar one to a query image. The method comprises steps, which are performed for each image of the set of given images. This is to establish a database having fingerprint information of each individual image. Hence, the following steps are performed for each image of the set of given images: detecting feature points in the image, deriving position information of the detected feature points, deriving local neighborhood descriptors of the feature points, the local neighborhood descriptors not comprising position information, grouping those of the feature points whose local neighborhood descriptors are similar to each other into at least one feature point group, and storing the position information of the feature points of said at least one group as a fingerprint of the image. In particular, the fingerprint information is stored in a database. Advantageously, the amount of data is manageable and the database is therefore portable and quickly searchable.

Furthermore, in order to create the appropriate prerequisites the query image is analyzed by performing the following steps, detecting feature points in the query image, deriving position information of the detected feature points, deriving local neighborhood descriptors of the feature points, the local neighborhood descriptors not comprising position information, grouping those of the feature points of the query image whose local neighborhood descriptors are similar to each other into at least one feature point group, and storing the position information of the feature points of said at least one group as a fingerprint of the query image.

Subsequently, the database is searched in an attempt to find an image most similar to the query image in the set of given images. This is performed by establishing an image similarity measure between the fingerprint of the query image and the fingerprints of images in the set of given images, the fingerprints being for example stored in the database. The image similarity measure is established based on one or a combination of the following conditions:
a) a similarity of the number of feature point groups in the two images,
b) a pairwise similarity of the position of the feature point groups in the two images,
c) a pairwise similarity of the position information of the feature points in groups in the two images,
d) a similarity of the distances between the feature point groups of one image with the distances between the feature point groups of the other image,
e) a pairwise similarity of the position of the ungrouped feature points of the two images.

Based on the value of the similarity measure, a most similar image of the set of given images is found. A best matching image has a highest similarity measure within the meaning of having at least one best matching group of feature points when compared to the at least one group of feature points in the query image. This score of similarity is determined according to at least one of the abovementioned conditions a) to e).

Advantageously, the search for the best matching image is performed by comparing the fingerprint of the query image with the fingerprints of the images to be searched, wherein it is only necessary that the fingerprints and not the entire images themselves are stored in the database. Therefore, the database is of a reasonable size and can be searched significantly faster than the image data itself. The best matches can be provided to a user, for example via a user interface. The user then selects the final image. This interaction is, however, restricted to the very last step.

Furthermore, the method of finding a most similar image in a stock of given images is capable of analyzing not only "normal" takes comprising moving objects and variable and a different image content, but, however, also static and artificial scenes having a plurality of similar feature points.

The method is further enhanced in that the image similarity measure is established by successively checking conditions a) to e) in the named order, wherein establishing the image similarity measure is aborted if one condition is not met.

Advantageously, the steps a) to e) require increasing CPU power or computing time. Hence, the computational effort is focused on images which are promising in terms of similarity with respect to the query image. This leads to a significantly increased search speed, because mismatches are discarded from the search process at a very early stage.

The object is further solved by an apparatus for finding, in a set of given images, a most similar one to a query image. The apparatus comprises a database generation unit equipped and configured to perform the following steps for each image of the set of given images: detect feature points in the image, derive position information of the detected feature points, derive local neighborhood descriptors of the feature points, the local neighborhood descriptors not comprising position information, group those of the feature points whose local neighborhood descriptors are similar to each other into at least one feature point group, and store the position information of the feature points of said at least one group as a fingerprint of the image.

Furthermore, the apparatus comprises a query image fingerprint generation unit equipped and configured to perform the following steps on the query image: detect feature points in the query image, derive position information of the detected feature points, derive local neighborhood descriptors of the feature points, the local neighborhood descriptors not comprising position information, group those of the feature points of the query image whose local neighborhood descriptors are similar to each other into at least one feature point group, and store the position information of the feature points of said at least one group as a fingerprint of the query image.

In addition to this, there is a similarity measurement unit equipped and configured to find an image most similar to the query image in the set of given images by establishing an image similarity measure between the fingerprint of the query image and the fingerprints of images in the set of given images based on a combination of:
a) a similarity of the number of feature point groups in the two images; and/or
b) a pairwise similarity of the position of the feature point groups in the two images; and/or
c) a pairwise similarity of the position information of the feature points in groups in the two images; and/or
d) a similarity of the distances between the feature point groups of one image with the distances between the feature point groups of the other image; and/or
e) a pairwise similarity of the position of the ungrouped feature points of the two images.

The similarity measurement unit is further equipped and configured in that it selects as a most similar image of the set of given images that image having a highest similarity measure within the meaning of having at least one best matching group of feature points when compared to the at least one group of feature points in the query image according to at least one of the conditions a) to e).

In an advantageous embodiment, the similarity measurement unit is configured to establish the similarity measure by successively checking conditions a) to e) in the named order, wherein establishing the image similarity measure is aborted if one condition is not met.

Same or similar advantages, which were mentioned relative to the method of finding, in a set of given images, a most similar one to a query image, apply to the apparatus according to aspects of the invention in a same or similar way and are therefore not repeated.

Further characteristics of the invention will become apparent from the description of the embodiments according to the invention together with the claims and the included drawings. Embodiments according to the invention can fulfill individual characteristics or a combination of several characteristics.

The invention is described below, without restricting the general intent of the invention, based on exemplary embodiments, wherein reference is made expressly to the drawings with regard to the disclosure of all details according to the invention that are not explained in greater detail in the text. The drawings show in:
- FIG. 1: a scenario in which feature points and local neighborhood descriptors are generated,
- FIGs. 2 and 3: are real images comprising similar feature points,
- FIGs. 4 and 5: are schematic illustrations of images having feature point groups,
- FIG. 6: illustrates a methods of extracting fingerprints from images of an image stream, and
- FIG. 7: illustrates a search for the origin of the query image.

In the drawings, the same or similar types of elements or respectively corresponding parts are provided with the same reference numbers in order to prevent the item from needing to be reintroduced.

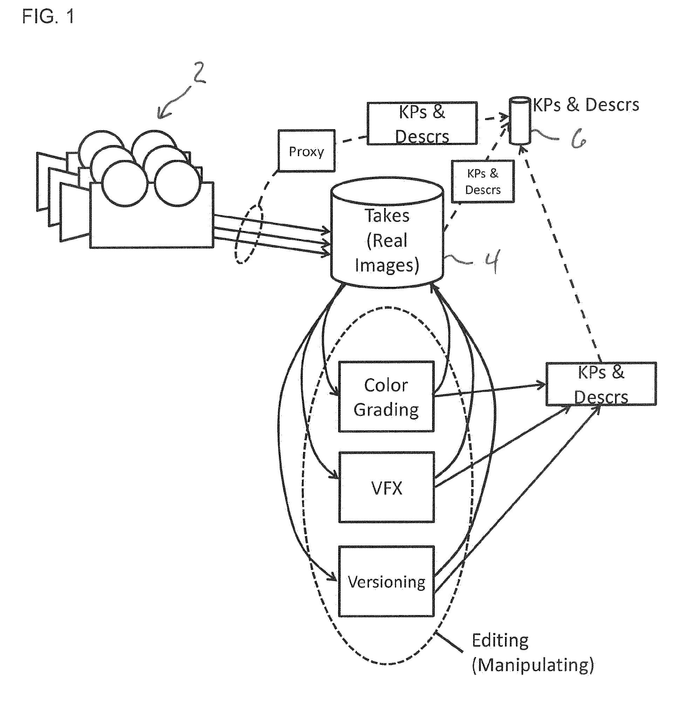

In FIG. 1 there is a simplified scenario, in which the method and apparatus according to aspects of the invention are applicable.

For example, a plurality of takes, schematically represented by a plurality of cameras 2, is generated for example during the movie production. The takes (real images) are stored in a database 4. During post-production or editing of the takes, various manipulations are performed. For example, there is color grading, VFX or Versioning of the original takes so as to generate for example various versions for cinema, Blu-ray or DVD. The post-processing is summarized by labeling the mentioned steps with Editing (Manipulating).

For the various versions of the original takes, for the real images of the takes taken from the image database 4 or directly from the captured streams using a proxy, feature points (referred to as KPs for the also frequently used term "key points" in the figures) and local neighborhood descriptors (referred to as "Descrs") are determined.

In particular, there is fingerprint information in the database 6 of each individual image stored in the image database 4. This fingerprint is established by performing the following steps for each image.

Starting with a raw film sequence, a respective one of the images 8 is firstly scaled or resized to a standardized picture resolution, e.g. 1920x1080 px. Secondly, feature points in the image are detected. This is performed by applying frequently known techniques and algorithms, for example a corner detector. Then position information, for example the x- and y-coordinates, of the detected feature points is derived. Thus, the position and the geometrical arrangement of the feature points are calculated. The local neighborhood descriptors of the feature points are subsequently calculated. The local neighborhood descriptors do not comprise position information. The local neighborhood descriptors describe an area around each feature point next beside the x- and y-coordinates thereof. This is a vector of scalars, wherein each scalar describes a property of the area surrounding the corresponding feature point.

Furthermore, the feature points are grouped. This, however, only applies to feature points whose local neighborhood descriptors are similar. Hence, at least one feature point group is generated.

The grouped feature points are not unique they are repetitive and are equal or similar to each other. It is the geometrical arrangement of those feature points, which represents the unique fingerprint of the image.

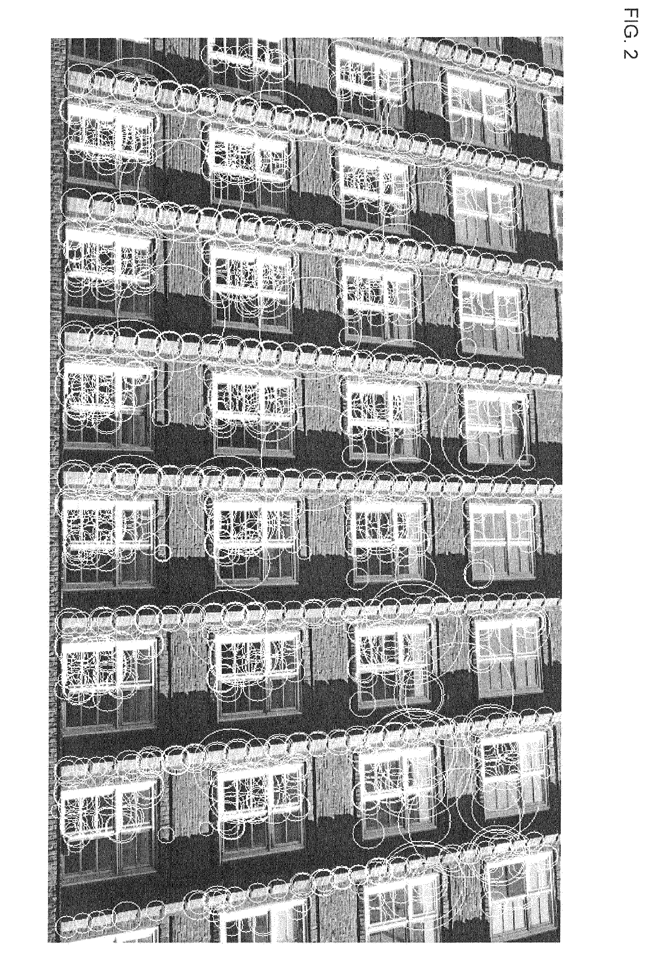

In FIG. 2 there is a real image showing a front of a building. Due to the strict geometric forms of the wall, the frieze and the window frames, this image comprises numerous repetitive feature points. For example, a corner detector detects the feature points and local neighborhood descriptors are derived from a pixel area surrounded by a circle around each feature point. This pixel area is considered as the area of the relevant pixels describing the feature point. Due to the repetitive and periodic structure of the wall, this information is not suitable for uniquely identifying the image.

However, feature points having similar local neighborhood descriptors, which means for example that the surrounding circle comprises similar image information, are grouped together in feature points groups.

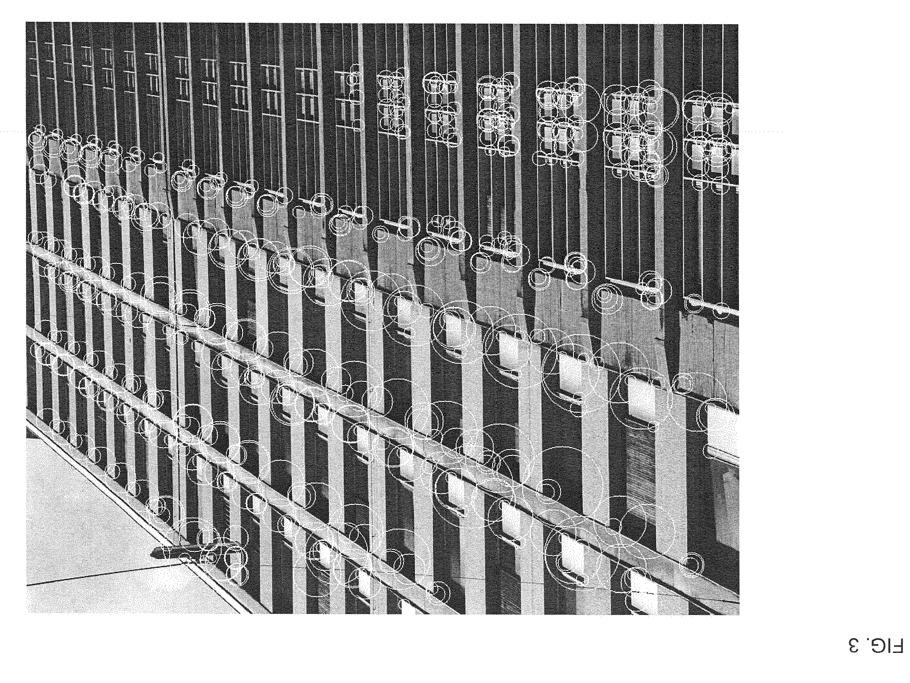

This not only applies to almost identical feature points. Grouping can also be performed for those of the feature points in each image whose local neighborhood descriptor is similar to a local neighborhood descriptor of a next neighbor feature point. This is illustrated by making reference to FIG. 3.

The real image shows a front of another building also having strict geometric forms. The image comprises numerous repetitive feature points. However, their local neighborhood descriptors slightly vary from top left to bottom right. This is due to the camera angle under which the image was captured. Again local neighborhood descriptors are derived from a pixel area surrounded by a circle around each feature point. The corner properties are still similar, but due to the perspective, the corners have different distances to the camera and therefore have different feature point descriptors. Hence, the feature points qualify for being grouped into one group of feature points in that local neighborhood descriptors of feature points being next neighbors need to be similar.

Furthermore, the local neighborhood descriptors can be designed in that they comprise scaling independent parameters. These are applied for deriving the image similarity measure.

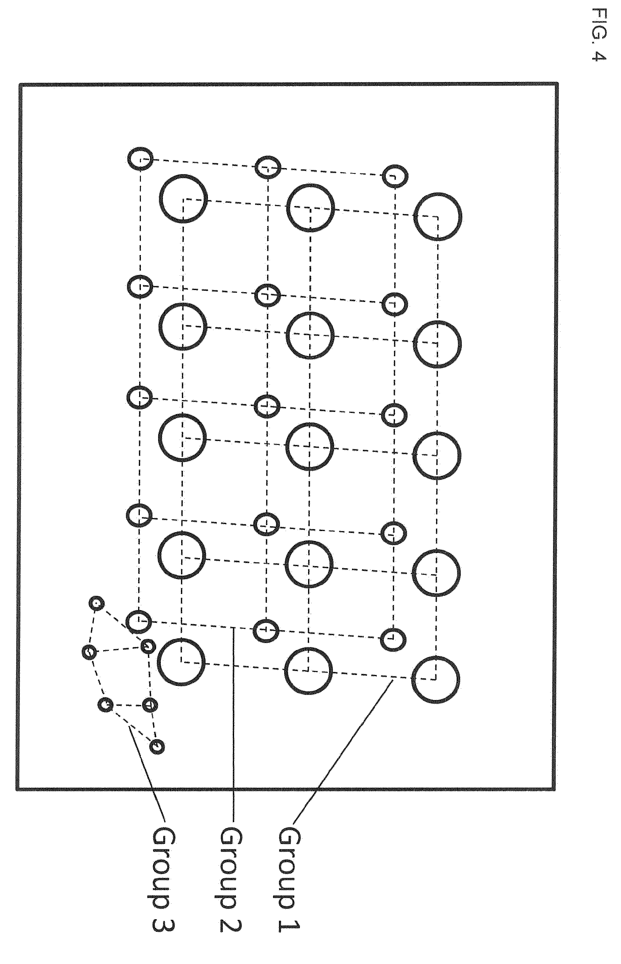

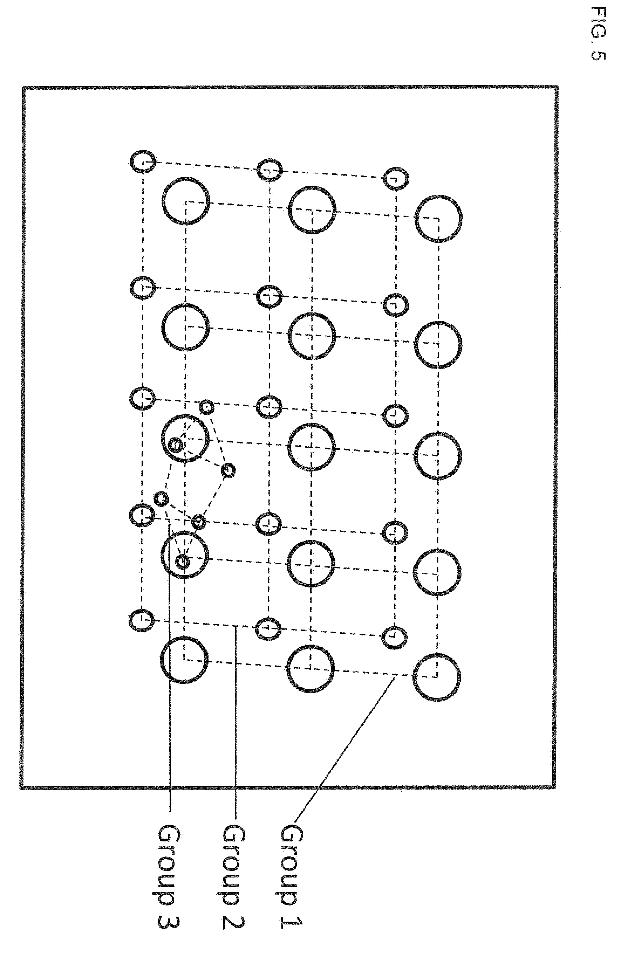

The grouping of feature points is schematically illustrated in FIG. 4. There are three groups, wherein for example group 1 and 2 relate to a regularly structured front of a building and group 3 relates to an object comprising feature points having similar local neighborhood descriptors. In FIG. 5, there is another schematic illustration of an image having three groups of feature points. However, in contrast to the image in FIG. 4, the object relating to feature point group 3 is located at a different position.

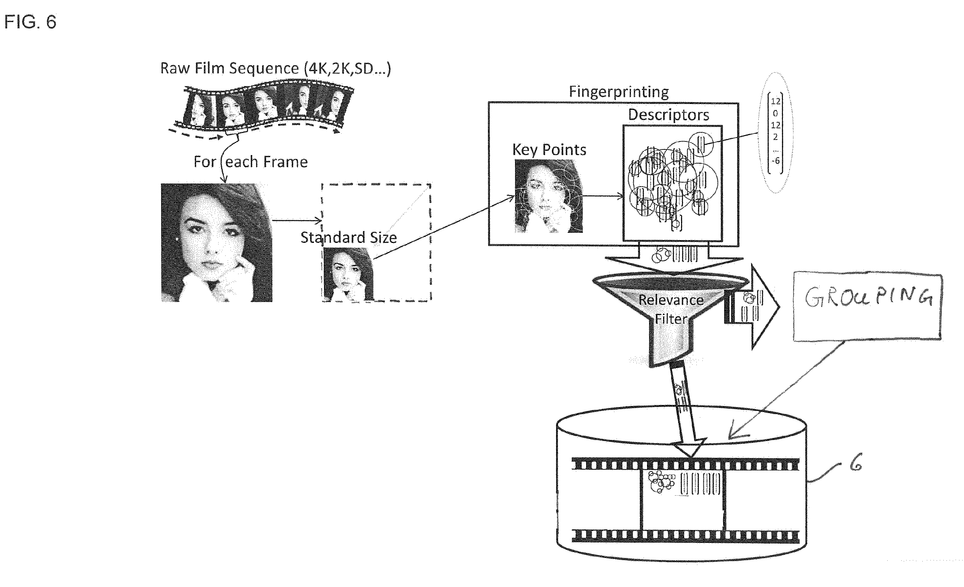

The database 6 comprising fingerprint information of the set of given images is now established. This is illustrated in FIG. 6.

Starting with a raw film sequence, each image may firstly be scaled to a standard size. Subsequently, feature points, also referred to as key points, are identified in the image. Local neighborhood descriptors are established for the feature points, wherein each local neighborhood descriptor is illustrated as a vector of scalars. The local neighborhood descriptors comprise unique local neighborhood descriptors and repetitive non-unique descriptors, for example of feature points of a regular structure. In the given example image, this type of feature points will be rare. Subsequently, the feature points are filtered and non-repetitive unique feature points are separated from those pertaining to features points of a repetitive structure. The latter are grouped into a group of feature points and subsequently both types of descriptors are stored in the database 6 for each individual image of the original raw data.

In order to create the appropriate prerequisites for finding the query image in the set of images, the query image is analyzed.

This is done by performing the following steps: Feature points in the query image are detected. Position information of the detected feature points is derived. Local neighborhood descriptors of the feature points are derived, wherein the local neighborhood descriptors do not comprise position information. Subsequently, those of the feature points of the query image whose local neighborhood descriptors are similar to each other are grouped into at least one feature point group. The position information of the feature points of said at least one group is stored as a fingerprint of the query image.

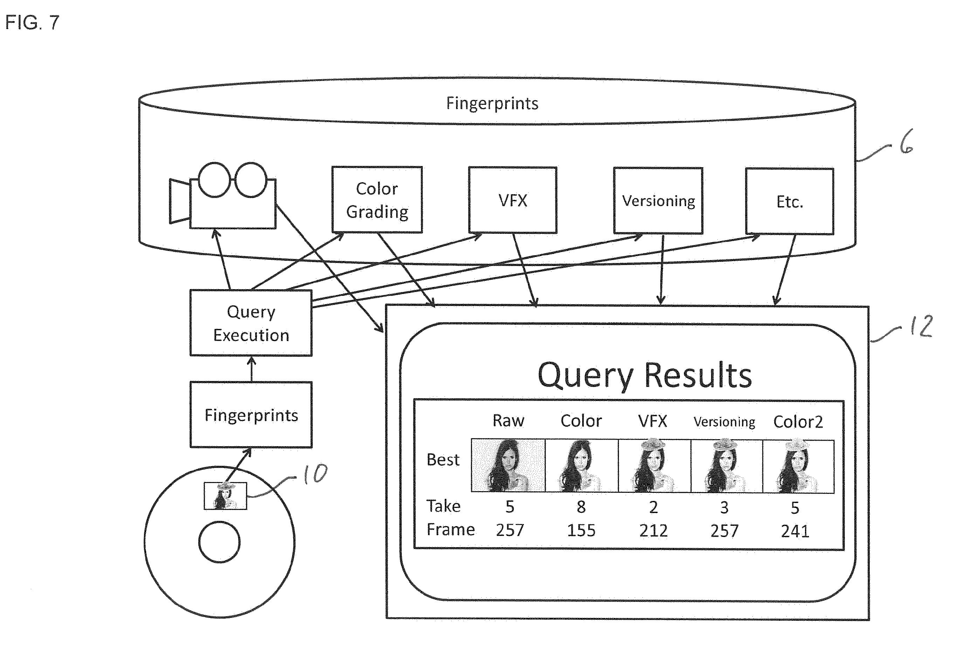

Subsequently, the database 6 is searched in an attempt to find an image most similar to the query image in the set of given images. This is illustrated in FIG. 7.

The query image 10 is for example stored on a CD. The origin of the query image 10 shall be derived by the search process. For example, there is an image sequence from a DVD. Let's assume it is clear which set of takes it has been derived from, i.e. the database of the original takes is available. The user wants to identify the original image. The original images have been manipulated to fit to the DVD format by cropping, color grading, resizing, color depth adaptations, video effects also known as "vfx", etc. As usual, no or nearly no documentation or metadata is available to reassign the images of the DVD to the original takes and images. The search shall lead to the original take(s) and the exact image of this original take(s) the query image belongs to.

The search is performed by establishing an image similarity measure between the fingerprint of the query image 10 and the fingerprints of images in the set of given images, the fingerprints being for example stored in the database 6. The image similarity measure is established based on one or a combination of the following conditions:
a) A similarity of the number of feature point groups in the two images.
   This refers in other words to a criterion defining that only those images having groups of feature points, i.e. the similar number is identical to one, are compared. For example, the images in FIG. 4 and 5 meet this criterion.
b) A pairwise similarity of the position of the feature point groups in the two images.
   When looking back to the images in FIG. 4 and 5, one of the two images would not be a successful hit for the other. The criterion is successfully met for groups 1 and 2 since these groups are arranged at pairwise identical positions in the images. However, group 3 is located at different positions in the two images and therefore the images are not considered identical.
c) A pairwise similarity of the position information of the feature points in groups in the two images.
   Again, reference should be made to the images in FIG. 4 and 5. The two images would be considered similar because the relative arrangement of feature points in the individual group is similar. In other words, the images are likely to be captured in the same take. This information can also be exploited.
d) A similarity of the distances between the feature point groups of one image with the distances between the feature point groups of the other image.
   According to this criterion, a position of the feature point groups relative to each other is considered. The images in FIG. 4 and 5 do not meet this criterion because group 3 is located at different positions.
e) A pairwise similarity of the position of the ungrouped feature points of the two images.
   This criterion refers to a geometrical arrangement of unique and non-repetitive feature points. If these are identically arranged, images are considered identical.

Based on the value of the similarity measure, a most similar image of the set of given images is found. This is for example displayed on a user terminal as shown in FIG. 7. A best matching image has a highest similarity measure within the meaning of having at least one best matching group of feature points when compared to the at least one group of feature points in the query image. This score of similarity is determined according to at least one of the abovementioned conditions a) to e). The different versions of the best matching image can be provided to a user.

Furthermore, the matching is enhanced in that the image similarity measure is established by successively checking conditions a) to e) in the named order. Establishing the image similarity measure is aborted if one condition is not met. This saves computational power since the criteria are successively more and more demanding CPU time.

Furthermore, the query process can be divided into different search processes. If there is a significant amount of similar feature points, but less than unique feature points, which is the usual case for normal takes, than a first search for the similar feature points can help providing a first impression whether a deeper search is really necessary or a further investigation is skipped because it is unlikely that this is the reference image. Otherwise the reference images with the most matching grids are compared in more detail with respect to the unique feature points. So, this approach can be used to speed-up the entire search process significantly.

To match the grid of a feature point group, for example a method like RANSAC can be applied. Fischler et al., "Random Sample Consensus: A Paradigm for Model Fitting with Applications to Image Analysis and Automated Cartography, http://www.ai.sri.com/pubs/files/708.pdf.

A simplification can also be applied in the RANSAC search, namely, instead of searching the entire group, a subset of the group can be used when the group is too large. Generally, a perfect match is not required. Some feature points may not be matched due to some image manipulations of the query image.

All named characteristics, including those taken from the drawings alone, and individual characteristics, which are disclosed in combination with other characteristics, are considered alone and in combination as important to the invention. Embodiments according to the invention can be fulfilled through individual characteristics or a combination of several characteristics. Features which are combined with the wording "in particular" or "especially" are to be treated as preferred embodiments.

## Claims

1. A method for deriving a feature point based image similarity measure comprising the steps of:
- detecting feature points in two images to be compared;
- deriving position information of the feature points;
- deriving local neighborhood descriptors of the feature points, the local neighborhood descriptors not comprising position information;
the method **characterized by** the further steps of:
- grouping those of the feature points of each image whose local neighborhood descriptors are similar to each other into feature point groups, and
- deriving the image similarity measure as a combination of
a) a similarity of the number of feature point groups in the two images; and/or
b) a pairwise similarity of the position of the feature point groups in the two images; and/or
c) a pairwise similarity of the position information of the feature points in groups in the two images; and/or
d) a similarity of the distances between the feature point groups of one image with the distances between the feature point groups of the other image; and/or
e) a pairwise similarity of the position of the ungrouped feature points of the two images.

2. The method according to claim 1, wherein grouping is also performed for those of the feature points of each image whose local neighborhood descriptor is similar to a local neighborhood descriptor of a next neighbor feature point.

3. The method according to claim 2, wherein the local neighborhood descriptors comprise scaling independent parameters, which are applied for deriving the image similarity measure.

4. An apparatus of deriving a feature point based image similarity measure comprising:
- a feature point detection unit, equipped and configured to detect feature points in two images to be compared,
- a feature point analysis unit equipped and configured to
∘ derive position information of the feature points and
∘ derive local neighborhood descriptors of the feature points, the local neighborhood descriptors not comprising position information;
the apparatus **characterized by**
- an image similarity measurement and grouping unit equipped and configured to
- group those of the feature points of each image whose local neighborhood descriptors are similar to each other into feature point groups, and derive the image similarity measure as a combination of
a) a similarity of the number of feature point groups in the two images; and/or
b) a pairwise similarity of the position of the feature point groups in the two images; and/or
c) a pairwise similarity of the position information of the feature points in groups in the two images; and/or
d) a similarity of the distances between the feature point groups of one image with the distances between the feature point groups of the other image; and/or
e) a pairwise similarity of the position of the ungrouped feature points of the two images.

5. The apparatus according to claim 4, wherein the image similarity measurement and grouping unit is further equipped and configured to group those of the feature points of each image whose local neighborhood descriptor is similar to a local neighborhood descriptor of a next neighbor feature point.

6. The apparatus according to claim 5, wherein the local neighborhood descriptors comprise scaling independent parameters and the image similarity measurement and grouping unit is further equipped and configured to apply these parameters for deriving the image similarity measure.

7. A method of finding, in a set of given images, a most similar one to a query image, the method comprising the steps of:
for each image of the set of given images:
- detecting feature points in the image,
- deriving position information of the detected feature points,
- deriving local neighborhood descriptors of the feature points, the local neighborhood descriptors not comprising position information,
- grouping those of the feature points whose local neighborhood descriptors are similar to each other into at least one feature point group, and
- storing the position information of the feature points of said at least one group as a fingerprint of the image,
for the query image:
- detecting feature points in the query image,
- deriving position information of the detected feature points,
- deriving local neighborhood descriptors of the feature points, the local neighborhood descriptors not comprising position information,
- grouping those of the feature points of the query image whose local neighborhood descriptors are similar to each other into at least one feature point group, and
- storing the position information of the feature points of said at least one group as a fingerprint of the query image,
finding an image most similar to the query image in the set of given images by establishing an image similarity measure between the fingerprint of the query image and the fingerprints of the images in the set of given images based on a combination of:
a) a similarity of the number of feature point groups in the two images; and/or
b) a pairwise similarity of the position of the feature point groups in the two images; and/or
c) a pairwise similarity of the position information of the feature points in groups in the two images; and/or
d) a similarity of the distances between the feature point groups of one image with the distances between the feature point groups of the other image; and/or
e) a pairwise similarity of the position of the ungrouped feature points of the two images.
wherein a most similar image of the set of given images is the image having a highest similarity measure within the meaning of having at least one best matching group of feature points when compared to the at least one group of feature points in the query image according to at least one of the conditions a) to e).

8. The method according to claim 7, wherein the image similarity measure is established by successively checking conditions a) to e) in the named order, wherein establishing the image similarity measure is aborted as soon as one of the conditions is not met.

9. An apparatus for finding, in a set of given images, a most similar one to a query image, the apparatus comprising:
a database generation unit equipped and configured to:
for each image of the set of given images,
- detect feature points in the image,
- derive position information of the detected feature points,
- derive local neighborhood descriptors of the feature points, the local neighborhood descriptors not comprising position information,
- group those of the feature points whose local neighborhood descriptors are similar to each other into at least one feature point group, and
- store the position information of the feature points of said at least one group as a fingerprint of the image;
a query image fingerprint generation unit equipped and configured to:
for the query image,
- detect feature points in the query image,
- derive position information of the detected feature points,
- derive local neighborhood descriptors of the feature points, the local neighborhood descriptors not comprising position information,
- group those of the feature points of the query image whose local neighborhood descriptors are similar to each other into at least one feature point group, and
- store the position information of the feature points of said at least one group as a fingerprint of the query image;
a similarity measurement unit equipped and configured to find an image most similar to the query image in the set of given images by establishing an image similarity measure between the fingerprint of the query image and
the fingerprints of the images in the set of given images based on a combination of:
a) a similarity of the number of feature point groups in the two images; and/or
b) a pairwise similarity of the position of the feature point groups in the two images; and/or
c) a pairwise similarity of the position information of the feature points in groups in the two images; and/or
d) a similarity of the distances between the feature point groups of one image with the distances between the feature point groups of the other image; and/or
e) a pairwise similarity of the position of the ungrouped feature points of the two images.
wherein the similarity measurement unit is further equipped and configured to identify as a most similar image of the set of given images that image having a highest similarity measure within the meaning of having at least one best matching group of feature points when compared to the at least one group of feature points in the query image according to at least one of the conditions a) to e).

10. The apparatus according to claim 9, wherein the similarity measurement unit is equipped and configured to establish the similarity measure by successively checking conditions a) to e) in the named order, and wherein establishing the image similarity measure is aborted as soon as one of the conditions is not met.
